# EUROPÄISCHE PATENTANMELDUNG

(11) **EP 0 862 944 A1**
(43) Veröffentlichungstag der Anmeldung: **09.09.1998**
(21) Anmeldenummer: 97103859.1
(22) Anmeldetag: 07.03.1997
(51) Int. Cl.: B01J 2/20, B29B 9/06

(54) **Verfahren und Vorrichtung zum Herstellen von Granulat aus Produktsträngen**

(71) Anmelder: Ciba Specialty Chemicals Holding Inc., 4057 Basel (CH)
(72) Erfinder: Die Erfindernennung liegt noch nicht vor
(74) Vertreter: Klingseisen, Franz, Dipl.-Ing.

(57) **Zusammenfassung**

Verfahren und Vorrichtung zum Herstellen von Granulat aus Produktsträngen, insbesondere klebrigen Produktsträngen, wobei die Produktstränge geschnitten werden und im Schneidbereich fein verteiltes Kühlmittel, wie Wasser, aufgesprüht wird.

## Beschreibung

Die Erfindung betrifft ein Verfahren und eine Vorrichtung zum Herstellen von Granulat aus Produktsträngen unter Verwendung von Wasser oder einer anderen geeigneten Flüssigkeit beim Schneidvorgang.

Beim Extrudieren von Kunststoffmaterial wird das Extrudat durch eine Lochplatte ausgepresst, worauf die ausgepressten Stränge zu Granulat geschnitten werden. Hierbei ist es bekannt, die Produktstränge nach dem Schneiden in einen Wasserring einzuführen, wobei das Granulat durch das Wasser abtransportiert wird. Auch ist es bekannt, eine Granulierung unter Wasser vorzunehmen.

Bei den bekannten Verfahren wird Wasser im Überschuß eingesetzt und es ist eine Aufgabe der Erfindung, ein Verfahren zur Stranggranulierung so auszubilden, daß selbst bei klebrigen Produktsträngen mit einem wesentlich verringerten Wassereinsatz gearbeitet werden kann. Hierfür soll auch eine geeignete Vorrichtung vorgeschlagen werden.

Diese Aufgabe wird erfindungsgemäß im wesentlichen dadurch gelöst, daß im Schneidbereich feinverteiltes Wasser gezielt auf die Produktstrange aufgesprüht wird.

Hierdurch kann der Wasserbedarf für den Schneidvorgang erheblich verringert werden, beispielsweise auf etwa 10% der gesamten Produktmenge. Auch beim Schneiden von klebrigen Produktsträngen kann der Wasserbedarf so gering gehalten werden, daß das gesamte aufgesprühte Wasser mit dem Granulat getrocknet werden kann.

Die Erfindung wird beispielsweise anhand der Zeichnungen näher erläutert. Es zeigen
- Fig. 1: eine schematische Seitenansicht der Vorrichtung zum Schneiden der Produktstränge,
- Fig. 2: einen Querschnitt durch einen Messerkopf, und
- Fig. 3: eine Stirnansicht des Messerkopfs.

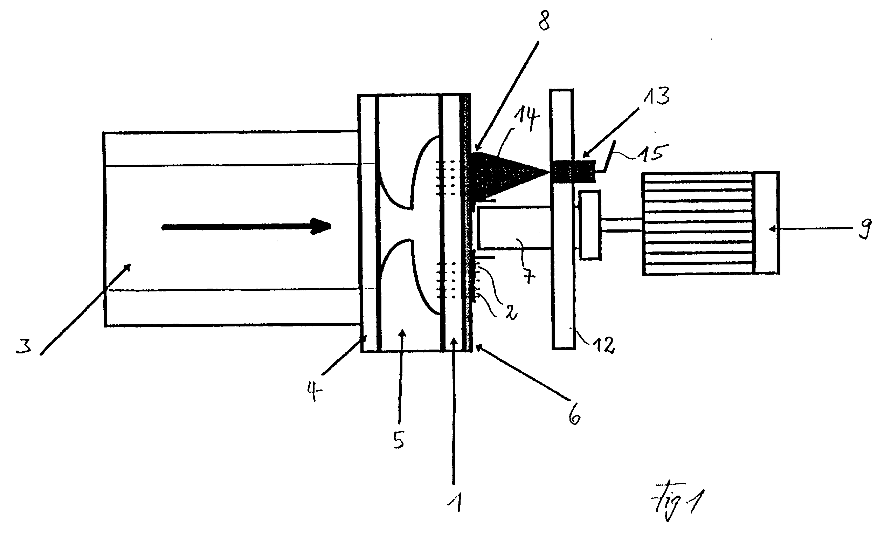

In Fig. 1 ist mit 1 eine Düsenplatte bezeichnet, in der z.B. in konzentrischen Ringen nur schematisch angedeutete Düsen 2 ausgebildet sind, durch die das Produkt mittels eines Extruders 3 zu Strängen ausgepreßt wird. Zischen Extruder 3 und Düsenplatte 1 ist eine Endplatte 4 am Extrudergehäuse und eine Umlenkplatte 5 angebracht, durch die das vom Extruder gelieferte Material auf die Düsen 2 verteilt wird. Die Düsenplatte 1 ist beheizt, um ein Verstopfen der Düsen 2 zu vermeiden. Auf der Austrittsseite der Düsenplatte 1 ist eine Isolierplatte 6 angeordnet, durch die sich die Düsen 2 erstrecken, und die die beheizte Düsenplatte 1 gegen Wärmeverlust isoliert.

Unmittelbar vor der Düsenplatte 1 mit Isolierplatte 6 ist ein Messerkopf 7 mit auf dem Umfang angeordneten Messern 8 angeordnet, der durch einen Antriebsmotor 9 in Drehung versetzt wird.

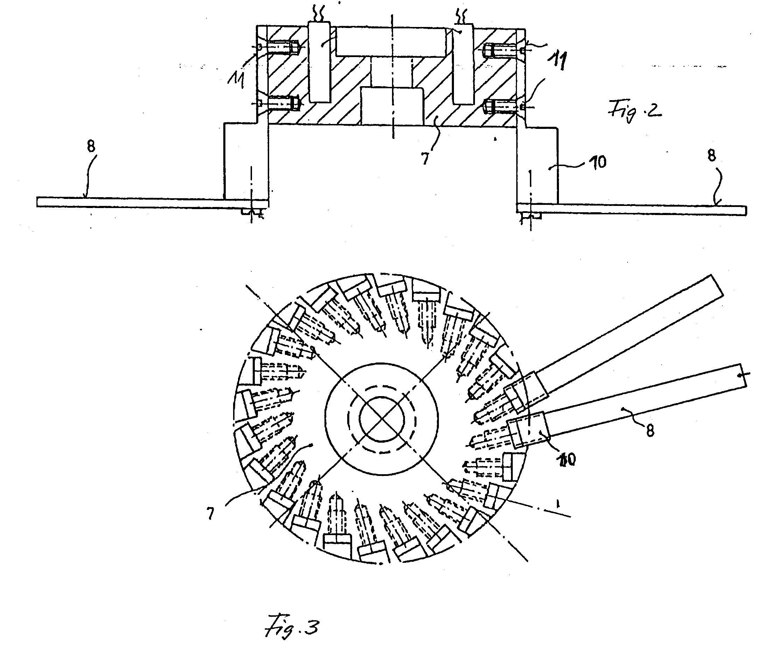

Fig. 2 und 3 zeigen eine beispielsweise Ausführungsform eines solchen Messerkopfs 7 mit radial abstehenden Messern 8, wobei bei diesem Ausführungsbeispiel vierundzwanzig Messer 8 auf dem Umfang des Messerkopfs 7 befestigt sind. Die Messer 8 sind an Messerhaltern 10 angeschraubt, die wiederum über Schrauben 11 auf dem Umfang des Messerkopfs 7 befestigt sind.

Der Messerkopf 7 kann konzentrisch zu den ringförmig angeordneten Düsen 2 angeordnet sein. Es ist aber auch möglich, den Schneidvorgang mittels eines exzentrisch zu den Düsenringen angeordneten Messers vorzunehmen.

Hinter dem Messerkopf 7 ist in Fig. 1 eine Halterung 12 für Zerstäuberdüsen 13 angeordnet, die einen Strahl 14 von feinverteiltem Wasser auf den Schneidbereich sprühen. Auf den stationären Halter 12, der beispielsweise als Ring ausgebildet sein kann, können beispielsweise acht Zerstäuberdüsen 13 ringförmig derart angeordnet sein, daß der gesamte Schneidbereich durch Strahlen 14 von feinverteiltem Wasser abgedeckt wird. Dieser Schneidbereich wird im wesentlichen durch die radiale Länge der Messer 8 vorgegeben, welche unmittelbar vor der Isolierplatte 6 angeordnet sind, so daß die aus den Düsen 2 austretenden Produktstränge sofort zu Granulat zerteilt werden.

Durch das Aufsprühen eines feinen Wassernebels auf die rotierenden Schneidmesser 8 werden diese mit einem feinen Wasserfilm überzogen, der ein Anhaften des Kunststoffmaterials verhindert, selbst wenn dieses sehr klebrig sein sollte. Gleichzeitig wird die Oberfläche der geschnittenen Granulate durch den Kontakt mit dem aufgesprühten Wasser verfestigt, wobei das Granulat zusätzlich durch Verdunstung gekühlt wird. Die Isolierplatte 6 schützt hierbei die Düsenplatte 1 vor Wärmeverlust, so daß vor allem im Bereich der Düsen 2 eine bestimmte Temperatur aufrechterhalten werden kann, damit ein Einfrieren der Düsen durch sich verfestigendes Kunststoffmaterial verhindert wird.

Die Zerstäuberdüsen 13 können so ausgebildet sein, daß mit dem bei 15 zugeführten Wasser zugleich Luft angesaugt wird, so daß mit dem feinverteilten Wassernebel Luft auf den Schneidbereich geblasen wird. Hierdurch wird eine Verfestigung der Oberfläche des geschnittenen Granulats und eine Verdunstungskühlung begünstigt, die durch die erzielte hohe Turbulenz aufgrund der Druckluftzerstäubung unterstützt wird.

Vorzugsweise wird Druckluft zugeführt, mittels der die Zerstäubung der Kühlflüssigkeit vorgenommen wird.

Anstelle der axialen Ausrichtung der Zerstäuberdüsen 13 nach Fig. 1 können diese auch weiter außen positioniert und schräg nach innen auf den Schneidbereich gerichtet werden. Wesentlich ist hierbei, daß im Schneidbereich unmittelbar am Austritt der Düsen 2 ein feiner Wassernebel aufgesprüht wird.

Je nach Art der eingesetzten Rohstoffe waren bisher die extrudierten Produktstränge nicht direkt an der Düsenplatte schneidbar, insbesondere wenn reine Kunststoffadditive und Additivmischungen extrudiert werden, die klebrige Produktstränge ergeben. Durch das Aufbringen eines feinen Wassernebels im Schneidbereich ist dies bei geringem Wasserbedarf möglich, wobei der Wasserbedarf so gering gehalten werden kann, daß das Wasser mit dem Granulat getrocknet werden kann. Hierdurch ist es auch möglich, die Produktstränge unmittelbar am Düsenaustritt zu schneiden, wobei durch die wärmeisolierte Düsenplatte 1 ein Verstopfen der Düsen verhindert wird.

Durch den geringen Einsatz von Wasser wird der für die Beseitigung des Abwassers erforderliche Aufwand gering gehalten. Die Installation der Zerstäuberdüsen kann einfach und kostengünstig vorgenommen werden, so daß vorhandene Extruder-Anlagen in einfacher Weise nachgerüstet werden können.

Anstelle von Wasser kann auch eine andere geeignete Kühlflüssigkeit verwendet werden, die auf den Schneidbereich feinverteilt aufgesprüht wird.

Das Aufsprühen des feinverteilten Kühlmittels kann auch tangential gegen die Messerlaufrichtung erfolgen.

## Patentansprüche

1. Verfahren zum Herstellen von Granulat aus Produktsträngen, insbesondere klebrigen Produktsträngen, wobei die Produktstränge geschnitten werden und im Schneidbereich fein verteiltes Kühlmittel, wie Wasser, aufgesprüht wird.

2. Verfahren nach Anspruch 1, wobei die Produktstränge unmittelbar am Austritt von Düsen durch Messer geschnitten werden, auf die das feinverteilte Kühlmittel aufgesprüht wird.

3. Verfahren nach Anspruch 1 oder 2, wobei mit der feinverteilten Kühlflüssigkeit Luft auf den Schneidbereich aufgeblasen wird.

4. Verfahren nach einem der vorhergehenden Ansprüche, wobei die Düsenbereiche, aus denen die Produktstränge austreten, gegenüber dem aufgesprühten Kühlmittel thermisch isoliert werden.

5. Vorrichtung zum Herstellen von Granulat aus Produktsträngen, insbesondere klebrigen Produktsträngen, mit einer beheizten Düsenplatte (1), die auf der Außenseite mit einer Isolierplatte (6) versehen ist, wobei unmittelbar vor dem Austritt der Düsen (2) Schneidmesser (8) angeordnet sind, auf die mittels Zerstäuberdüsen (13) ein verteiltes Kühlmittel aufgesprüht wird.

6. Vorrichtung nach Anspruch 5, wobei die Zerstäuberdüsen (13) in Achsrichtung auf die Düsenplatte (1) gerichtet sind.

7. Vorrichtung nach Anspruch 5, wobei die Zerstäuberdüsen (13) schräg radial nach innen auf den Schneidbereich an der Düsenplatte (1) gerichtet sind.

8. Vorrichtung nach einem der Ansprüche 5 bis 7, wobei vor der Düsenplatte (1) ein Messerkopf (7) mit radial abstehenden Messern (8) angeordnet ist, und um den Messerkopf (7) eine Halterung (12) für die Zerstäuberdüsen (13) vorgesehen ist.

9. Vorrichtung nach Anspruch 5, wobei die Zerstäuberdüsen tangential auf die umlaufenden Messer entgegen der Laufrichtung gerichtet sind.
